(19) Europäisches Patentamt
European Patent Office
Office européen des brevets

(11) Numéro de publication: **0 560 246 A1**

(12) **DEMANDE DE BREVET EUROPEEN**

(21) Numéro de dépôt: **93103659.4**

(51) Int. Cl.5: **H04M 1/60**

(22) Date de dépôt: **08.03.93**

(30) Priorité: **12.03.92 FR 9203079**

(43) Date de publication de la demande:
**15.09.93 Bulletin 93/37**

(84) Etats contractants désignés:
**AT BE DE DK ES FR GB GR IE IT LU NL SE**

(71) Demandeur: **SWATCH AG**
**Jakob Stämpflistrasse 94**
**CH-2500 Biel(CH)**

(72) Inventeur: **Schlesinger, Benjamin**
**Gerberweg 20**
**CH-2560 Nidau(CH)**

(74) Mandataire: **de Raemy, Jacques et al**
**ICB Ingénieurs Conseils en Brevets SA**
**Passage Max. Meuron 6**
**CH-2001 Neuchâtel (CH)**

(54) **Circuit d'interface pour appareil de communication.**

(57) Le circuit d'interface selon l'invention est destiné (5) à être utilisé en combinaison avec un générateur de signaux de communication et deux lignes de signal (4) pour la transmission d'un signal de communication selon des normes de communication, ledit signal de communication ayant une composante alternative et une composante continue. Ce circuit est caractérisé en ce qu'il comporte des moyens de réglage de caractéristiques (7, 8) pour régler le rapport entre le courant du signal circulant sur les lignes et la tension du signal entre lesdites lignes (4) afin de satisfaire les normes de communication en vigueur au lieu d'utilisation.

Ce circuit s'applique par exemple à un système téléphonique.

Fig. 2
1
2
3
4a
4b
4
5
6
7
8

EP 0 560 246 A1

La présente invention se rapporte à un circuit d'interface destiné à être utilisé en combinaison avec un générateur de signaux de communication et deux lignes de signal pour la transmission d'un signal de communication, ledit signal de communication ayant une composante alternative et une composante continue et plus particulièrement à un circuit d'interface de ce type qui comprend des moyens de réglage de la composante continue pour ajuster le rapport entre la tension et le courant de la composante continue. Le circuit d'interface de la présente invention est particulièrement destiné à être utilisé en combinaison avec un système téléphonique, et sera par conséquent décrit en rapport avec cet exemple illustratif. On comprendra que toutefois cette invention n'est pas limitée à ce cas particulier.

Les systèmes téléphoniques classiques comportent plusieurs stations d'émission et de réception d'un signal coopérant avec des microphones et des écouteurs, agencés sous la forme de combinés.

Le signal qui est créé quand un utilisateur parle dans un microphone, est amplifié et associé à une onde porteuse.

Ce signal modulé est ensuite transmis à un autre utilisateur par l'intermédiaire de deux lignes de signal. A une autre station, le signal est démodulé et amplifié puis transmis par l'intermédiaire d'un écouteur pour permettre la réception par cet utilisateur.

Le signal modulé ainsi transmis doit présenter certaines caractéristiques dans chaque pays à cause des normes de communication.

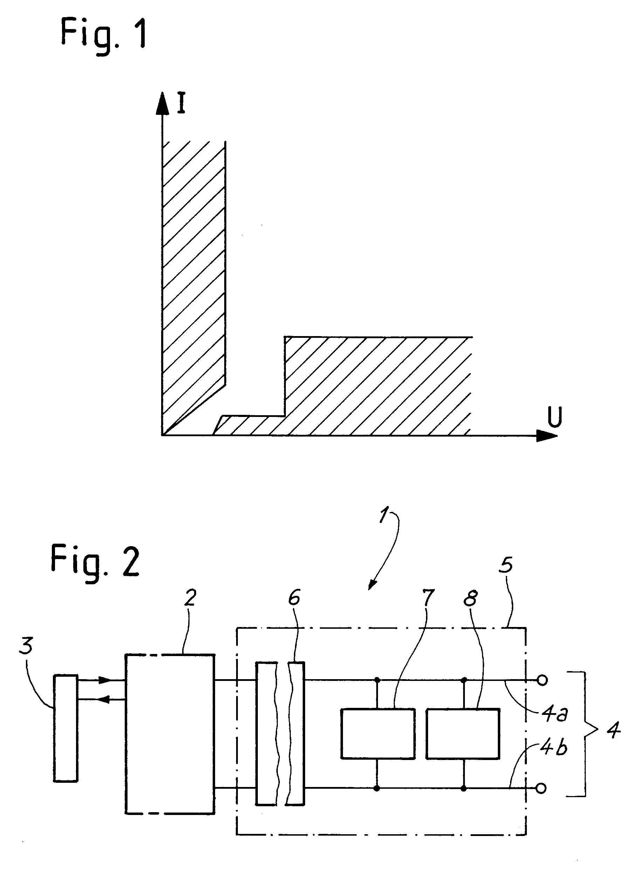

Par exemple, certains rapports entre le courant continu et la tension continue sur les lignes de signal ne sont pas autorisés. La figure 1 représente un exemple d'une caractéristique courant continu-tension continue, la région hachurée indiquant les valeurs courant/tension inacceptables qui ne peuvent pas être transmises sur les lignes de signal. De plus, il est exigé que la composante alternative du signal modulé et en particulier l'impédance en courant alternatif de la station d'émission/réception du signal, vis-à-vis du signal modulé transmis sur les lignes de signal, se conforment aux normes de communication concernant ces caractéristiques.

Les systèmes téléphoniques classiques sont conçus pour se conformer uniquement à l'un de ces ensembles de spécifications et ne peuvent ainsi être utilisés que dans un pays seulement, ou dans des pays ayant des normes identiques. Si le système téléphonique doit être utilisé là où d'autres normes sont en vigueur, le circuit des stations d'émission/réception du signal doit être analysé, reconçu et modifié.

Une telle reconception est longue, chère et ne peut être réalisée que par une personne ayant des connaissances dans la conception des circuits électroniques. De plus, le circuit électronique interne d'une station d'émission/réception d'un signal téléphonique n'est pas facilement accessible aux acheteurs des systèmes téléphoniques. Pour modifier de tels circuits électroniques internes, des outils spécifiques et de l'expérience sont nécessaires, et de telles modifications ne peuvent généralement être réalisées que par des vendeurs expérimentés. Les dépenses et les désavantages de telles opérations ont donc conduits à la conclusion que les systèmes téléphoniques classiques ne peuvent pas être utilisés facilement dans des pays ayant des normes différentes.

Un but de la présente invention est de fournir une solution aux problèmes susmentionnés que présentent les systèmes de communication de l'art antérieur.

Un autre but de la présente invention est de fournir un système permettant à des systèmes de communication, tels que des systèmes téléphoniques, d'être facilement utilisables dans des pays ayant des normes de communication qui diffèrent.

Un autre but de la présente invention est de fournir un système qui permette une telle utilisation étendue des systèmes téléphoniques et qui puisse être mis en oeuvre facilement et à bon marché par les acheteurs et les utilisateurs de ces systèmes téléphoniques.

A cet effet, la présente invention a pour objet un circuit d'interface caractérisé en ce que les moyens de réglage de la composante continue comprennent une source de courant destinée à être connectée aux lignes de signal pour contribuer un courant constant à ladite composante continue, la source de courant étant prévue pour fournir du courant uniquement lorsque la tension de la composante continue dépasse une valeur prédéterminée.

Dans un mode de réalisation de la présente invention, le circuit d'interface comporte des moyens de réglage de la composante continue pour régler le rapport entre la tension et le courant de la composante continue du signal de communication. Un circuit simple n'ayant aucun effet significatif sur les autres fonctions d'un générateur de signal peut être fourni. Les éléments déterminant la tension et l'impédance du circuit peuvent être choisis de manière à satisfaire la relation entre le courant et la tension de la composante continue du signal, exigée par les normes de communication au lieu d'utilisation.

Dans un autre mode de réalisation de la présente invention, le circuit d'interface des moyens de réglage de la composante alternative pour régler le rapport entre la tension et le courant de la composante alternative du signal de communication. Un circuit simple peut être fourni, dont les éléments peuvent être choisis indépendamment de leur influence sur les autres parties du circuit.

D'autres caractéristiques et avantages de l'invention apparaîtront mieux à la lecture de la description détaillée qui suit, prise en référence aux dessins annexés qui sont donnés à titre d'exemples, et dans lesquels :

- la figure 1 représente un diagramme illustrant un exemple de la caractéristique courant continu-tension continue exigée par les normes liées à la transmission des signaux de communication;
- la figure 2 est un schéma représentant un circuit d'interface selon la présente invention;
- la figure 3A est un schéma des moyens de réglage de la composante continue dans le circuit d'interface de la figure 2;
- la figure 3B est un diagramme représentant la caractéristique courant-tension des moyens de réglage de la composante continue, représentés à la figure 3A;
- la figure 4 est un schéma d'autres moyens de réglage de la composante continue dans le circuit d'interface de la figure 2;
- la figure 5A est un schéma d'autres moyens de réglage de la composante continue dans le circuit d'interface de la figure 2;
- la figure 5B est un diagrammne représentant la caractéristique courant-tension des moyens de réglage de la composante continue, représentés à la figure 5A;
- la figure 6 est un schéma de moyens de réglage de la composante alternative du circuit d'interface; et
- la figure 7 est un schéma du circuit d'interface de la figure 2.

La figure 2 représente un système téléphonique 1 qui comporte une station 2 d'émission/réception du signal, un combiné 3 et des moyens 4 de transmission du signal comportant deux ligne de signal respectivement 4a et 4b. D'autres stations similaires à la station 2 peuvent être reliées aux lignes de transmission 4a, 4b de manière analogue. De plus, il est représenté sur cette figure un circuit d'interface 5 qui est connecté entre la station 2 et les lignes 4a, 4b. Dans ce mode de réalisation, le circuit d'interface 5 comporte un circuit d'isolation 6 qui fournit une isolation élevée et ainsi une protection électrique de la station par rapport au reste du système.

Le circuit d'interface 5 comporte des premiers moyens 7 et des seconds moyens 8 reliés aux lignes 4a, 4b pour régler respectivement la composante continue et la composante alternative du signal. Les moyens 7 et 8 sont connectés entre les lignes 4 de transmission du signal. Bien que les moyens 7 de réglage de la composante continue et les moyens 8 de réglage de la composante alternative soient représentés ensemble sur la figure 2, on remarquera que l'un et l'autre ne sont que des cas particuliers des moyens de réglage des caractéristiques du circuit d'interface de la présente invention. Dans un autre mode de réalisation, non représenté, seuls les moyens 7 de réglage de la composante continue où seuls les moyens 8 de réglage de la composante alternative peuvent être prévus.

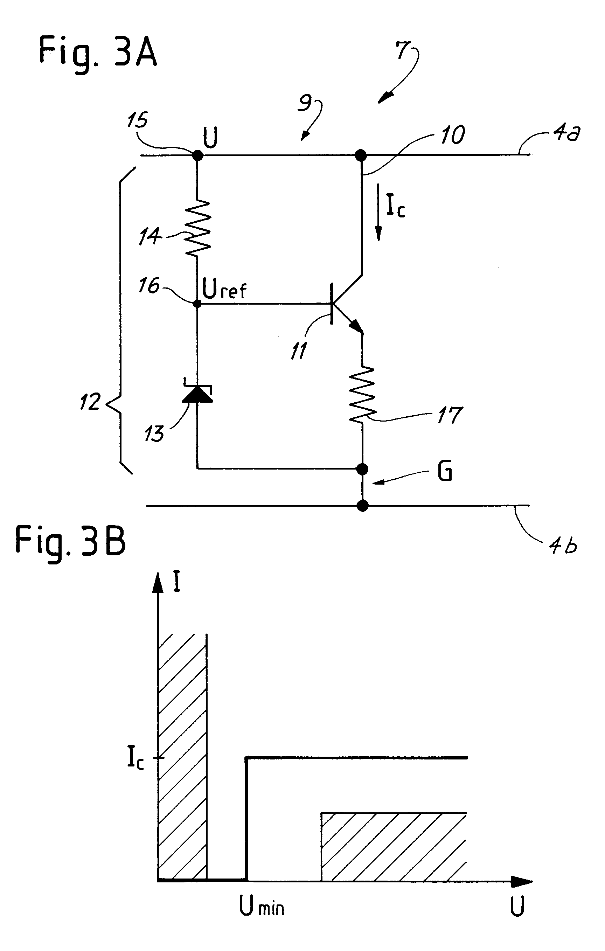

La figure 3A représente un circuit formant un mode de réalisation des moyens 7 de réglage de la composante continue.

Les moyens 7 de réglage de la composante continue représentés sur cette figure comportent une source de courant 9 comprenant un circuit régulateur de tension 12, un conducteur 10, un transistor de commutation 11 et une résistance de polarisation 17.

Le circuit régulateur de tension 12 comporte une résistance de polarisation 14 et une diode Zener 13 à polarisation inverse.

La résistance de polarisation 14 est reliée d'une part à une borne 15 et d'autre part à la cathode de la diode Zener 13. Le collecteur du transistor de commutation 11 est relié au conducteur 10, et l'émetteur de ce transistor de commutation 11 est relié à une borne de la résistance de polarisation 17. L'autre borne de la résistance de polarisation 17 est reliée avec l'anode de la diode Zener 13, à la ligne de signal 4b.

La borne 15 qui reçoit la tension U ainsi que le conducteur 10 sont connectés à une source positive de courant du circuit de la figure 2.

La borne 15 et le conducteur 10 sont reliés à la ligne de signal 4a.

La source de courant 9 est susceptible de fournir un courant constant Ic au travers du conducteur 10 quand l'élément de commutation 11 est rendu conducteur.

Le régulateur de tension 12 qui, dans le mode de réalisation représenté, comporte un seul élément de régulation de tension 13 et une résistance de polarisation 14, commande le fonctionnement de l'élément de commutation 11.

Comme représenté, l'élément de régulation de tension 13 et l'élément de commutation 11, peuvent comprendre respectivement une diode Zener et un transistor de commutation, mais d'autres éléments de circuit peuvent être utilisés comme le comprendra l'homme du métier. Quand la tension entre les deux lignes de signal 4a et 4b de la figure 2, est telle que la tension Uref à la borne 16 est plus grande que la tension minimum Umin nécessaire pour rendre conducteur le transistor de commutation 11, un courant constant Ic circule dans le conducteur 10. En d'autres termes, dès que la tension dans la région base-collecteur du transistor 11 est approximativement égale à 0,7V, le courant Ic est donné par la formule :

$$\begin{aligned} Ic &= (Uref - 0{,}7) / Re \\ &\quad \text{(où Re est égal à la résistance de 17)} \\ &= \text{constante} \end{aligned}$$

et cela quand la tension à la borne 15 est supérieure à la tension Umin.

Le rapport entre le courant et la tension reporté sur la figure 3A est représenté par le diagramme de caractéristique courant-tension de la figure 3B.

Quand la tension U entre les lignes 4a et 4b est inférieure à Umin, la tension Uref à la borne 16 n'est pas suffisante pour rendre conducteur le transistor de commutation 11 et aucun courant ne circule dans le conducteur 10. Cependant, quand la tension U dépasse Umin, le transistor de commutation 11 est rendu conducteur et un courant continu constant Ic apparait dans ce circuit. Dans le circuit de la figure 3A, la diode Zener formant l'élément de régulation de tension 13, et la résistance de polarisation 14 peuvent être choisis de façon adéquate pour sélectionner la tension voulue Uref à laquelle le transistor de commutation 11 conduit et la résistance 17 peut être choisie de façon appropriée pour ajuster la valeur du courant continu constant Ic qui circule dans le conducteur 10.

De façon appropriée, on a fourni un circuit qui présente la caractéristique courant-tension représentée sur la figure 3B, et qui peut être utilisé pour se conformer aux normes de communication de nombreux pays, relatives à la composante continue d'un signal de communication transmis par téléphone. Comme on peut le voir sur la figure 3B, un tel circuit peut être avantageusement utilisé pour éviter les régions interdites d'une caractéristique courant-tension tout en fournissant un courant continu constant.

De plus, à cause du faible temps de réponse du transistor de commutation 11, une onde en forme de marche est fournie par le circuit de la figure 3A. La résistance en courant alternatif d'une telle onde en forme de marche est suffisamment élevée pour n'avoir aucune influence significative sur la réponse en courant alternatif du reste du circuit dans le système téléphonique et cette résistance peut ainsi être conçue de façon indépendante du circuit chargé de traiter la composante alternative du signal de communication téléphonique.

Afin qu'un système téléphonique comportant un circuit tel que celui représenté sur la figure 3A puisse être utilisé dans des régions ayant des normes de communication différentes, au moins une des résistances 14 et 17 et l'élément de régulation en tension 13 peuvent être remplacés. A cause de la réponse en marche de la caractéristique représentée sur la figure 3B, le changement des composants dans ce circuit à des effets mineurs sur le circuit chargé de traiter la composante alternative du signal de communication téléphonique et ce changement peut être effectué facilement.

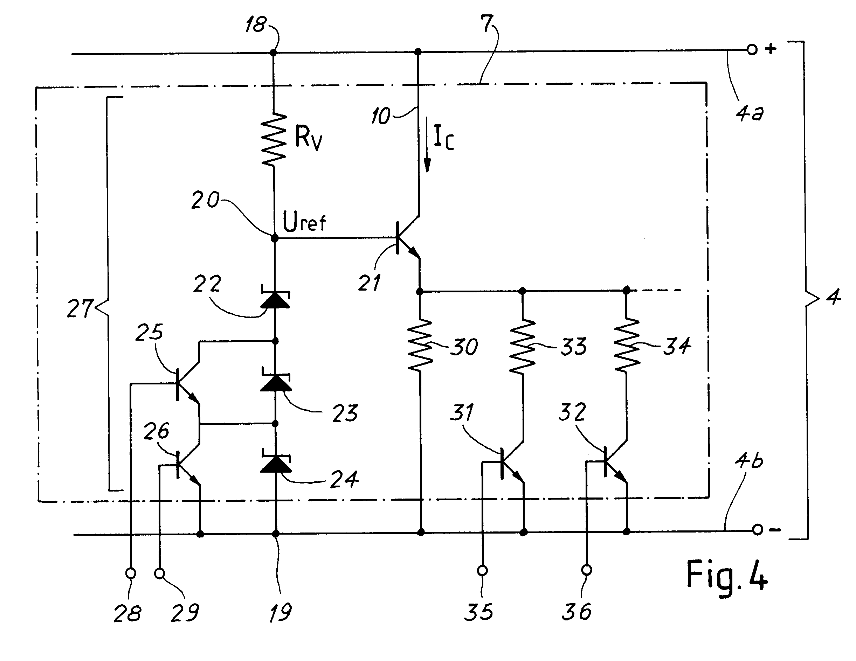

Sur la figure 4, on a représenté une variante de réalisation autre que le simple remplacement des composants. Des moyens 7 de réglage de la composante continue sont également connectés entre les lignes de signal 4a, 4b.

Les moyens 7 de réglage de la composante continue comporte trois diodes Zener 22, 23 et 24 reliées en série de sorte que la cathode est reliée à l'anode de la diode adjacente, des transistors de commutation 21, 25, 26, 31 et 32, un conducteur 10, une résistance de polarisation $R_v$, et des résistances de polarisation 30, 33 et 34.

Comme sur la figure 3A, le collecteur du transistor de commutation 21 est connecté au conducteur 10. Le conducteur 10 est de même relié par son autre extrémité à la ligne 4a.

Des bornes des résistances de polarisation 30, 33 et 34 sont reliées ensemble à l'émetteur du transistor de commutation 21. Les autres bornes de ces résistances de polarisation 30 sont reliées à la ligne 4b, tandis que les autres bornes des résistances de polarisation 33 et 34 sont respectivement reliées aux collecteurs des transistors de commutation 31 et 32. Les émetteurs des transistors de commutation 31 et 32 sont chacun reliés à la ligne 4a. Les bases des transistors de commutation 31 et 32 sont respectivement reliées à des entrées 35 et 36.

La résistance de polarisation $R_v$ est reliée d'une part, à la ligne 4a (borne 18), et d'autre part, à la cathode de la diode Zener 22. l'anode de la diode Zener 24 est reliée à la ligne 4b.

Le collecteur du transistor de commutation 25 est connecté entre l'anode de la diode Zener 22 et la cathode de la diode Zener 23, tandis que l'émetteur du transistor de commutation 25 est connecté au collecteur du transistor de commutation 26 entre l'anode de la diode Zener 23 et la cathode de la diode Zener 24.

L'émetteur du transistor 26 est relié à la ligne 4b. Les bases des transistors 25 et 26 sont reliées respectivement à des entrées 28 et 29. Quand la tension de la composante continue du signal de communication entre les bornes 18 et 19 est à un niveau suffisant pour que la tension à la borne 20 dépasse la tension Uref, le transistor de communication 21 est rendu conducteur. La valeur de la tension Uref et par conséquent la tension Umin, peuvent être déterminées par la sélection de, soit l'élément de régulation en tension 22 seul (la diode Zener), soit en combinaison avec les éléments de régulation de tension 23 ou 24 ou ces éléments combinés. Le circuit selon ce mode de réalisation comporte de plus des transistors 25 et 26 afin de mettre en circuit ou hors circuit les diodes Zener 23 et 24 du régulateur de tension 27, et ces composants peuvent être rendus conducteurs par l'application d'un signal à la base des transistors 25 et 26 par les bornes 28 et 29.

Selon un mode de réalisation de l'invention, ce signal est appliqué, par l'intermédiaire des bornes 28 et 29 qui sont sous forme de connexions volantes, à la source d'alimentation du circuit téléphonique. Dans un autre mode de réalisation, les bornes 28 et 29 peuvent être reliées à un bus de données et les signaux peuvent être fournis aux transistors 25 et 26 par l'intermédiaire d'un logiciel approprié. Comme le comprendra l'homme du métier, d'autres moyens permettant d'appliquer ces signaux peuvent être utilisés.

Lorsque le transistor de commutation 21 est rendu conducteur, un courant passe au travers de la résistance 30. On a de plus prévu des transistors 31 et 32 afin que le courant puisse de même circuler soit dans l'une des deux résistances 33 ou 34, soit dans les deux. Les transistors 31 et 32 sont rendus conducteurs par l'application d'un signal aux bornes 35 et 36.

Ainsi, la tension minimal Umin entre les bornes 18 et 19 à laquelle un courant constant Ic circule dans le conducteur 10 peut être ajustée, et la valeur du courant constant Ic elle-même peut être ajustée, sans qu'il ne soit besoin de remplacer physiquement des composants du circuit.

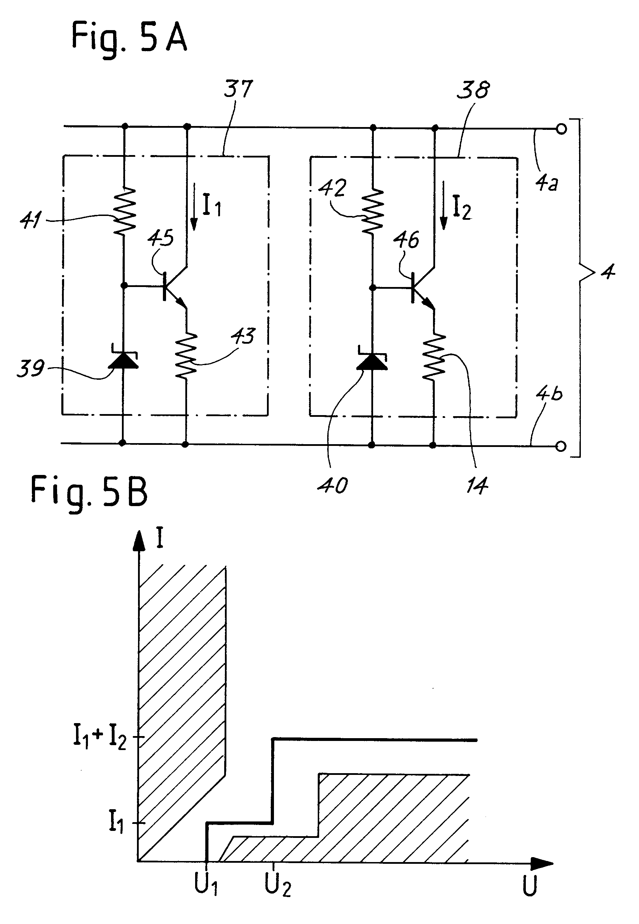

La figure 5A représente un autre mode de réalisation des moyens de réglage de la composante continue du circuit d'interface selon la présente invention. Ce circuit comporte des sources de courant 37 et 38 du type ci-dessus décrits, connectées entre les lignes de signal 4a et 4b. On peut utilisé aussi plus que deux sources de courant.

Le circuit représenté à la figure 5A comporte des sources de courant 37 et 38 similaires à celles décrites et représentées notamment à la figure 3A et ne seront par conséquent pas détaillées ici.

Les deux éléments de régulation en tension 39 et 40 et des résistances 41, 42, 43 et 44 sont choisis de sorte qu'un transistor de commutation 45 de la source de courant 37 soit rendu conducteur et conduise un courant I1 à un niveau de tension plus bas U1 que ne le fait le transistor de commutation 46 de la source de courant 38 à un niveau de tension U2.

De manière analogue, un élément de régulation en tension similaire 39 et une résistance 43 sont choisis pour fournir un niveau de courant continu constant I1, tandis que l'élément de régulation en tension 40 et la résistance 44 sont choisis pour fournir un niveau de courant continu constant I2 qui soit additionné au courant I1 quand le transistor 46 est conducteur. De cette façon, et comme représenté par la caractéristique courant-tension de la figure 5B, une caractéristique à plusieurs marches peut être formée qui grâce à la sélection d'éléments de circuits appropriés peut être rendue conforme aux normes de communication dans un grand nombre de lieux d'utilisation. Comme représenté sur la figure 4, les sources de courant 37 et 38 peuvent comporter des moyens d'ajustement appropriés, tels que des éléments de régulation en tension et des résistances supplémentaires de sorte qu'un seul système téléphonique puisse être utilisé pour satisfaire les normes de communication dans un certain nombre de lieu d'utilisation sans besoin d'une restructuration physique du circuit de ce téléphone.

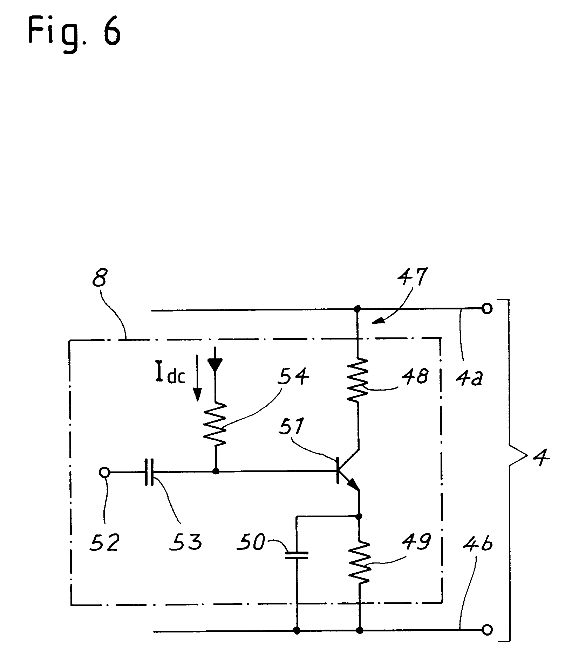

Le circuit de la figure 6 représente un mode de réalisation des moyens de réglage de la composante alternative de la figure 2. La figure 6 représente un circuit d'impédance 47 connecté entre les lignes 4a et 4b. Le circuit d'impédance 47 comporte des éléments d'impédance 48, 49 et 50 et un transistor de commutation 51.

Dans le circuit 47, la résistance 48 est reliée au collecteur du transistor de commutation 51 et l'autre borne du condensateur 50 et la résistance 49 sont reliées ensemble à l'émetteur du transistor de commutation 51.

Une borne du circuit 47 est reliée à la ligne 4a tandis que son autre borne, à laquelle est relié le condensateur 50 et la résistance 49, est reliée à la ligne 4b.

Les moyens 8 de réglage de la composante alternative comportent de même une borne d'entrée 52 reliée par un condensateur de couplage 53 à la base du transistor 51.

Une resistance 54 est connectée à la base du transistor 51 et est connectée par ailleurs à une source de courant continu constant (non représenté).

Un signal de communication est transmis à la borne 52, par l'intermédiaire d'un condensateur de couplage 53, à la base du transistor de commutation 51 qui amplifie le signal de communication dans le circuit 47. La résistance 54 fournit une partie du courant continu constant Idc provenant des moyens 7 de réglage de la composante continue (comme représenté sur la figure 2), à la base du transistor de commutation 51 afin d'assurer le fonctionnement du transistor de commutation 51 dans sa région active, de sorte que le courant du circuit d'impédance 47 reste relativement constant sur une large gamme de tensions règnant entre les lignes 4a et 4b. Comme le comprendra l'homme du métier, le courant continu constant Idc peut être fourni de nombreuses façons et les moyens 7 de réglage de la composante continue ne sont pas indispensables pour fournir le courant Idc.

Comme représenté sur la figure 4, des éléments d'impédance supplémentaires peuvent être ajoutés ou enlevés du circuit d'impédance 47 en utilisant des transistors de commutation supplémentaires de sorte que la caractéristique courant-tension requise dans différents lieux d'utilisation soit facilement obtenue.

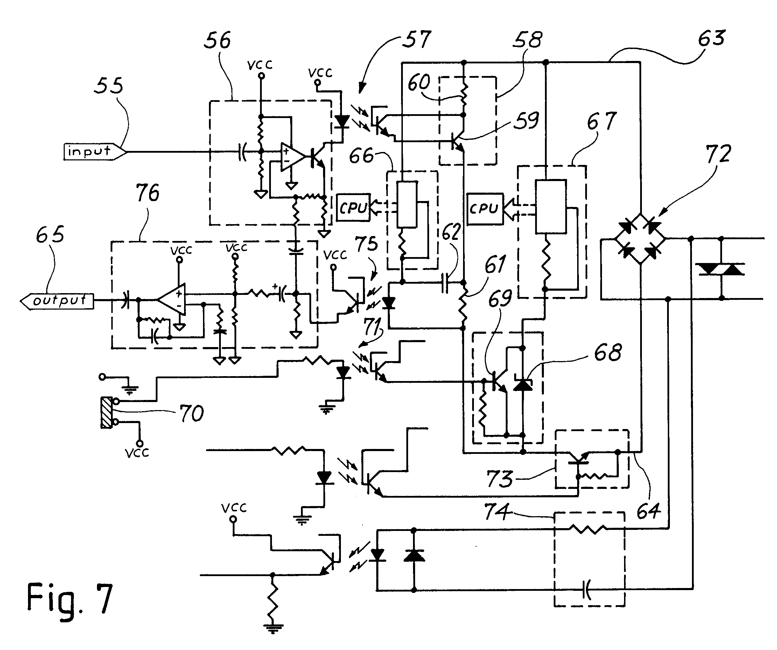

La figure 7 représente un schéma détaillé d'un circuit selon un mode de réalisation d'un circuit d'interface de la présente invention. Un signal, représentant un message parlé émis depuis un microphone par exemple, est reçu à l'entrée 55 et est transmis à un amplificateur 56 où le signal est amplifié. Bien qu'un exemple particulier d'un circuit d'amplification soit représenté, d'autres configurations peuvent de même être employées. Un coupleur opto-électronique 57 fournit une isolation très élevée et une protection électrique au système téléphonique. Après avoir passé au travers du coupleur opto-électronique 57, le signal transmis est amplifié par l'amplificateur en courant alternatif 58, le transistor 59 étant conducteur quand le signal transmis est présent, les éléments d'impédance en courant alternatif 60, 61 et 62 agissant pour amener le signal sur des lignes de transmission 63 et 64 à une tension voulue. Afin que le signal puisse être retransmis à l'utilisateur, par exemple au travers d'un haut-parleur dans un combiné, ou afin qu'un signal reçu autre que celui transmis par le circuit d'interface puisse être entendu par un utilisateur, les éléments d'impédance en courant alternatif 61 et 62 sont dimensionnés de façon appropriée de sorte que la majeure partie du courant circulant au travers du transistor 59 circule de même au travers de l'élément d'impédance en courant alternatif 62. Le signal est ensuite transmis par l'intermédiaire du coupleur optoélectronique 75 et amplifié par le circuit amplificateur 76 avant d'être reçu à la sortie 65.

En plus de l'amplificateur en courant alternatif 58, le signal présent sur les lignes 63 et 64 est combiné à celui produit par les sources de courant 66 et 67. Les sources de courant 66 et 67 fournissent une caractéristique en courant continu telle que celle représentée sur la figure 5B. De plus, les sources de courant 66 et 67 peuvent comprendre un certain nombre d'éléments supplémentaires de régulation en tension et par exemple des éléments d'impédance, tels que représentés sur la figure 4, qui peuvent être mis en circuit ou hors circuit dans le circuit d'interface par des signaux appropriés émis d'une unité de traitement centrale à un autre endroit du système téléphonique. Dans une autre variante, d'autres éléments supplémentaires peuvent être sélectionnés par des cavaliers, ou d'autres organes à commande manuelle, comme le comprendra l'homme du métier.

Dans le mode de réalisation particulier de la présente invention, un élément supplémentaire 68 de régulation en tension peut être mis en circuit ou hors circuit vis-à-vis de la source de courant 67 par la commande du transistor de commutation 69. Un cavalier 70 peut être utilisé pour connecter la base du transistor de commutation 69, au travers du coupleur opto-électronique 71, à la masse ou à la tension d'alimentation $V_{cc}$. De cette manière, la caractéristique du circuit d'interface de la présente invention peut être modifiée pour différents pays pour ce conformer aux caractéristiques de ces pays.

Le signal émis de l'amplificateur en courant alternatif 58 et des source de courant 66 et 67 est présent sur les lignes 63 et 64, et transmis sur les lignes de signal 4, après avoir passé au travers d'un pont redresseur 72. D'autres éléments de circuit, tels qu'un commutateur de ligne 73 et un circuit de sonnerie 74 sont incorporés dans le circuit schématique de la figure 7 à titre complémentaire, mais ne forment pas des éléments de l'invention.

## Revendications

**1.** Circuit d'interface (5) destiné à être utilisé en combinaison avec un générateur de signaux de communication et deux lignes de signal (4a, 4b) pour la transmission d'un signal de communication, ledit signal de communication ayant une composante alternative et une composante continue, ledit circuit d'interface 5 comprenant des moyens (7) de réglage de la composante continue pour ajuster le rapport entre la tension et le courant de ladite composante continue, caractérisé en ce que lesdits moyens (7) de réglage de la composante continue comprennent une source de courant (9) destinée à être connectée auxdites lignes de signal (4a, 4b) pour contribuer un courant constant à ladite composante continue, ladite source de courant (9) étant prévue pour fournir du courant uniquement lorsque la tension de ladite composante continue dépasse une valeur prédéterminée.

2. Circuit d'interface selon la revendication 1, caractérisé en ce que ladite source de courant (9) comporte une partie de circuit (10) connectée entre lesdites lignes de signal (4a, 4b), ladite partie de circuit comprenant au moins un premier élément d'impédance (17) et un premier élément de commutation (11), et un régulateur de tension (12) connectés entre lesdites lignes de signal (4a, 4b) pour fournir une tension de référence constante (Vref) audit premier élément de commutation (11), lorsque ladite tension de la composante continue dépasse ladite valeur prédéterminée, pour rendre conducteur ledit premier élément de commutation (11) et pour permettre audit courant constant ($I_c$) de circuler dans ladite partie de circuit (10).

3. Circuit d'interface selon la revendication 2, caractérisé en ce que ledit premier élément de commutation (11) comprend un transistor, en ce que ledit premier élément d'impédance (17) est connecté entre l'émetteur dudit transistor et l'une desdites lignes de signal (4b), en ce que le régulateur de tension (12) comprend un deuxième élément d'impédance (14) connecté entre ladite autre ligne de signal (4a) et la base dudit transistor, et une première diode zener (13) connectée de manière à être polarisée dans le sens indirect entre la base dudit transistor et ladite ligne de signal (4b), de manière à ce que lorsque ladite tension de la composante continue dépasse ladite valeur prédéterminée, ladite première diode zener (13) fournit ladite tension de référence constante (Vref) à la base dudit transistor.

4. Circuit d' interface selon l'une des revendications 2 ou 3, caractérisé en ce qu'il comprend de plus des moyens pour régler l'impédance dudit premier élément d'impédance (17).

5. Circuit d'interface selon l'une ou l'autre des revendications précédentes, caractérisé en ce qu'il comprend de plus des moyens (31, 32) pour inclure ou exclure au moins un élément d'impédance supplémentaire (33, 34) dans ladite partie du circuit (10).

6. Circuit d' interface selon l'une des revendications 2 à 5, caractérisé en ce qu'il comprend de plus des moyens pour régler la tension de référence constante (Vref) fournie par ledit régulateur de tension (12).

7. Circuit d'interface selon l'une des revendications 3 à 6, caractérisé en ce qu'il comprend de plus des moyens (25, 26) pour inclure ou exclure au moins une diode zener additionnelle polarisée dans le sens inverse (23, 24) d'être connecté en série avec ladite première diode zener (22) entre la base dudit transistor et ladite ligne de signal (4b).

8. Circuit d'interface selon l'une ou l'autre des revendications précédentes, caractérisé en ce qu'il comprend une pluralité de moyens (37, 38), l'un au moins desdits moyens de réglage de la composante continue (37) étant réglable indépendamment pour permettre de fournir à ladite composante continue un courant constant quand ladite tension du signal dépasse une valeur prédéterminée qui est différente de la valeur prédéterminée pour les autres parmi la pluralité de moyens de réglage de la composante continue (38).

9. Circuit d'interface selon l'une ou l'autre des revendications précédents, caractérisé en ce qu'il comprend des moyens de réglage de la composante alternative (8) pour régler le rapport entre la tension et le courant de cette composante, caractérisé en ce que lesdits moyens de réglage de la composante alternative (8) comprennent un circuit d'impédance (47) destiné à être connecté entre lesdites lignes de signal (4a, 4b), ledit circuit d'impédance (47) comprend au moins un élément d'impédance (48, 49, 50) et un transistor (51), et en ce que on transmet ledit signal de communication en le fournissant à la base dudit transistor (51), lesdits moyens de réglage de la composante alternative (8) comprenant de plus une source de courant constant ($I_{dc}$) pour fournir un courant constant à la base dudit transistor (51) pour faire fonctionner ledit transistor (51) dans sa région active.

Fig. 1

I
U

Fig. 2

1
2
3
4
4a
4b
5
6
7
8

Fig. 3A
7
9
15
U
10
4a
Ic
14
16
Uref
11
12
13
17
G
4b
Fig. 3B
I
Ic
Umin
U

4
+
-
4a
4b
7
10
$I_C$
$R_V$
$U_{ref}$
18
19
20
21
22
23
24
25
26
27
28
29
30
31
32
33
34
35
36


Fig. 4

Fig. 5A
37
38
4a
42
41
I1
I2
45
46
4
43
39
4b
40
14
Fig. 5B
I
I1+I2
I1
U1
U2
U

Fig. 6

8
47
Idc
54
48
4a
51
4
52
53
50
49
4b

63
72
64
67
68
58
59
61
69
73
74
62
60
57
66
75
71
CPU
CPU
VCC
VCC
VCC
VCC
VCC
VCC
VCC
56
55
76
70
input
output
65

Fig. 7

Office européen des brevets

# RAPPORT DE RECHERCHE EUROPEENNE

Numero de la demande

EP 93 10 3659

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X<br><br><br><br>A | TEXAS INSTRUMENTS DATA BOOK 'Telecom Circuits - Telephone sets, switching and transmission products. Pages 2.77 - 2.91' 1990 , DB051 - ISBN2-86886-035-4<br>* page 2-83; figure 5 * | 1-3<br><br><br><br>4-9 | H04M1/60 |
| A | VOL. DL136 - REV 2 'MOTOROLA DATABOOK " TELECOMMUNICATIONS DEVICE DATA"'<br>1989 , USA<br>" TCA 3388 Product Preview "<br>* page 2-672 - page 2-675 * | 1-9 | |
| A | IEEE INTERNATIONAL SOLID STATE CIRCUITS CONFERENCE<br>vol. 25, Février 1982, NEW YORK, USA<br>pages 208 - 209<br>CONSIGLIO ET AL. 'A Programmable Speech Circuit Suitable for Telephone Transducers'<br>* le document en entier * | 1-9 | |
| | | | DOMAINES TECHNIQUES RECHERCHES (Int. Cl.5 ) |
| A | US-A-4 354 060 (NIERTIT ET AL.)<br>* colonne 3, ligne 1 - ligne 20 * | 1,2 | H04M |
| A | EP-A-0 093 036 (FAIRCHILD CAMERA & INSTRUMENT CORPORATION)<br>* page 5, ligne 10 - page 6, ligne 11 * | 1-9 | |

Le présent rapport a été établi pour toutes les revendications

| Lieu de la recherche | Date d'achèvement de la recherche | Examinateur |
|---|---|---|
| LA HAYE | 28 MAI 1993 | MONTALBANO F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)